# EUROPÄISCHE PATENTSCHRIFT

(11) **EP 0 340 812 B1**
(45) Veröffentlichungstag und Bekanntmachung des Hinweises auf die Patenterteilung: **21.07.1993**
(21) Anmeldenummer: 89112158.4
(22) Anmeldetag: 30.01.1988
(51) Int. Cl.: F16H 55/14, F16H 55/12

(54) **Dämpfungsmittel zum Dämpfen der Schallabstrahlung als Luftschall oder Körperschall für ein in der Scheibe senkrecht zur Achse geteiltes Rad, insbesondere ein Zahnrad**
Damping means for damping the emission of air-conducted or structural noise by a wheel divided perpendicularly to the axis, especially a toothed wheel
Moyen d'amortissement pour amortir l'émission de bruit transmis par l'air ou par les solides pour des roues partagées perpendiculairement à l'axe, en particulier des roues dentées

(30) Priorität: 08.04.1987 DE 3711359
(43) Veröffentlichungstag der Anmeldung: 08.11.1989
(62) Teilanmeldung aus: 88101366.8
(73) Patentinhaber: Pelzer, Helmut, 58313 Herdecke (DE)
(72) Erfinder: Pelzer, Helmut, 58313 Herdecke (DE)
(74) Vertreter: Schneider, Wilhelm, Dipl.-Phys.

(56) Entgegenhaltungen:
- DE-A- 3 023 977
- DE-A- 3 141 101
- DE-C- 172 536
- FR-A- 481 572

## Beschreibung

Gegenstand der Erfindung ist ein Dämpfungsmittel zum Dämpfen der Schallabstrahlung als Luftschall oder Körperschall für ein Rad, insbesondere ein Zahnrad mit Pfeilverzahnung, wobei sich im Rad gleichförmige Ausnehmungen mit im wesentlichen rechteckigem Querschnitt befinden und nur an den Wandteilen jeder Ausnehmung Schichten eines viskoelastischen Dämpfungsmittels vorhanden sind, die mit je einem Deckblech an die Wandteile angezwängt sind.

Es handelt sich bei der vorliegenden Patentanmeldung um eine Teilanmeldung aus der europäischen Patentanmeldung 88 101 366.8

Bei Zahnrädern werden im Betrieb durch den normalen Zahneingriff, den sogenannten Eingriffstoß, Eigenschwingungen angeregt, die in verschiedenen Moden auftreten. Diese Moden sind abhängig von der Form und der Steifigkeit des Zahnrades. Der Eingriff und die die Schwingung anregende Größe ist dagegen von der Ausbildung der Zahnung abhängig.

So tritt zum Beispiel bei einem Zahnrad, das aus Zahnkranz, Scheibe und Nabe besteht bei einer ersten Resonanzfrequenz eine Mode auf, die eine Kippbewegung der Nabe gegenüber der Scheibe bewirkt. Die Drehachse des Zahnrades steht nicht mehr senkrecht auf der Ebene des Zahnkranzes. Diese Schwingung führt im wesentlichen zur Anregung von Körperschall, die Erzeugung von Luftschall tritt dagegen zurück.

Bei einer weiteren Mode führt der Zahnkranz eine periodische Pumpbewegung in Richtung der Welle aus, gegensinnig in zwei um 90 Grad gegeneinander versetzten Richtungen. Dies führt zu einer periodischen Biegung der Scheibe zwischen zwei gegeneinander um 90 Grad versetzten Ovalen. Gleichzeitig wird dabei die Nabe verformt, ebenfalls zwischen zwei um 90 Grad versetzten Ovalen, dies aber um 90 Grad versetzt, sodaß bei einer maximalen Verformung der Scheibe in einer Richtung eine maximale Verformung der Nabe in einer dazu um 90 Grad versetzten Richtung auftritt. Die energiereichere und damit die für die Schallbelastung wichtigere Schwingbewegung ist dabei die des Zahnkranzes. Daraus folgt, daß eine Versteifung der Scheibe keine Minderung der Schwingungen sondern lediglich eine Verschiebung zu höheren Frequenzen hin bewirkt. Hier kann nur ein Dämpfung der Amplitude die Schwingung vermindern. Diese Mode ist ebenfalls für die Erregung von Körperschall aber in noch höherem Maße für Luftschall wichtig.

Bei einer dritten Mode tritt noch eine Pumpbewegung der Nabe in Richtung der Welle auf, sodaß sich hier eine starke Verbiegung der Scheibe, ein Hub und eine Kippbewegung der Nabe und die Pumpbewegung des Zahnkranzes überlagern, wodurch hier mehr als vier Schwingungsknoten vorhanden sind. Diese Mode ist sowohl für die Erzeugung von Körperschall als auch von Luftschall wichtig.

Aus den vorstehenden Ausführungen geht hervor, daß bei Anregung der erwähnten Moden sowohl Axialschwingungen als auch Radialschwingungen auftreten.

Es ist bereits aus der DE-A-31 41 101 bekannt, auf beiden Seiten der Scheibe des Zahnrades unter Zwischenfügung einer viskoselastischen Dämpfungsschicht eine Deckscheibe anzubringen, um die Schwingungen des Zahnrades zu dämpfen. Aus der Beschreibung dieser DE-Schrift, Seite 1, letzter Absatz und Seite 2, erster Absatz ergibt sich jedoch, daß durch diese Anbringung der Dämpfungsmittel lediglich Axialschwingungen gedämpft werden, nicht aber Radialschwingungen.

Weiterhin ist aus der FR-A-481 572 eine Schnecke bekannt, die aus einer Vielzahl von Scheiben in Paaren oder Gruppen zusammengesetzt ist. Dabei weisen die Scheiben mindestens zum Umfang hin einen Abstand gegeneinander auf um damit eine Schalldämpfung zu ermöglichen. Ein zwischen den Scheiben als Dämpfungsmittel eingebrachtes, halbelastisches Material bewirkt durch periodische Kompression und Entspannung eine Dämfung auftretender Schwingungen.

Der Erfindung liegt die Aufgabe zugrunde, bei Rädern der eingangs beschriebenen Art die Radialschwingungen oder vorteilhafter sowohl die Radialschwingungen als auch die Axialschwingungen zu dämpfen.

Die erfindungsgemäße Aufgabe wird dadurch gelöst, daß das Rad in der Scheibe senkrecht zur Achse geteilt und aus zwei solchen Teilen zusammengesetzt ist und daß sich die Ausnehmungen an den einander zugewandten Flächen der beiden Radteile befinden.

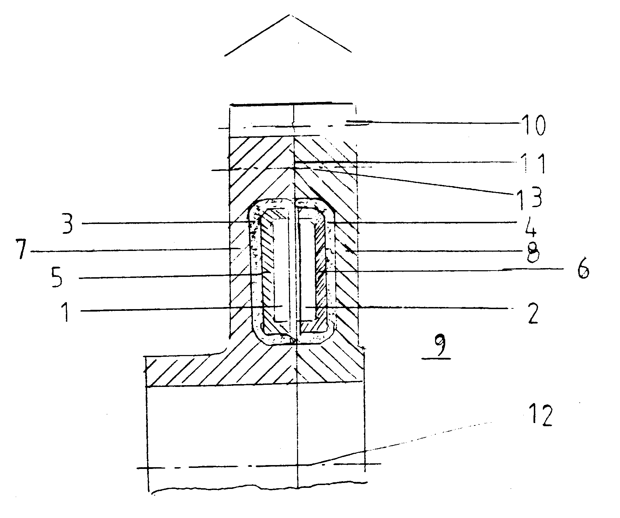

Das in der Figur dargestellte Beispiel stellt ein Zahnrad 9 mit Pfeilzahnung 10 dar, das entlang der Linie 11 senkrecht zur Achse 12 in zwei Teile 7,8 geteilt und zum Beispiel mit Schrauben 13 zusammengesetzt ist. In beiden Teilen sind Ausnehmungen 1 und 2 eingeformt, an deren Wänden Dämpfungsmittel 3 und 4 und Deckbleche 5 und 6 angezwängt sind. Diese Ausführungsform bringt zwar höhere Herstellungskosten mit sich, da jedoch wegen der Pfeilzahnung keine Axialkräfte auftreten, ist eine geräuscharme Lagerung möglich. Radial- und Axialschwingungen sowie Körper- und Luftschall sind stark gedämpft.

Es empfiehlt sich, die Dickendimensionierung von gedämpftem Körper, Dämpfungsschicht und Deckblech wie 4 : 1 : 1 zu bemessen.

## Patentansprüche

1. Dämpfungsmittel zum Dämpfen der Schallabstrahlung als Luftschall oder Körperschall für ein Rad (9), insbesondere ein Zahnrad mit Pfeilverzahnung (10), wobei sich im Rad (9) gleichförmige Ausnehmungen (1,2) mit im wesentlichen rechteckigem Querschnitt befinden und nur an den Wandteilen jeder Ausnehmung (1,2) Schichten eines viskoelastischen Dämpfungsmittels (3,4) vorhanden sind, die mit je einem Deckblech (5,6) an die Wandteile angezwängt sind,
**dadurch gekennzeichnet**,
daß das Rad (9) in der Scheibe senkrecht zur Achse (12) geteilt und aus zwei solchen Radteilen (7,8) zusammengesetzt ist und daß sich die Ausnehmungen (1,2) an den einander zugewandten Flächen der beiden Radteile (7,8) befinden.

2. Dämpfungsmittel nach Anspruch 1,
**dadurch gekennzeichnet**,
daß die Dickendimensionierung von bedämpftem Körper (7,8), Dämpfungsmittel (3,4) und Deckblech (5,6) wie 4 : 1 : 1 bemessen ist.

## Claims

1. Damping means for damping sound radiation as air-borne sound or structure-borne sound for a wheel (9), particularly a double helical gear wheel (10), uniform recesses (1, 2) of essentially rectangular cross-section being provided in the wheel (9) and layers of a visco-elastic damping medium (3, 4), which are forced against the wall parts by a cover sheet (5, 6) in each case, being provided only on the wall parts of each recess (1, 2), characterised in that the wheel (9) is divided in the disc at right angles to the axis (12) and is composed of two such wheel parts (7, 8), and in that the recesses (1, 2) are situated in the mutually facing surfaces of the two wheel parts (7, 8).

2. Damping means according to Claim 1, characterised in that the thickness dimensioning of the damped body (7, 8), the damping medium (3, 4) and the cover sheet (5, 6) is in the proportion of 4 : 1 : 1.

## Revendications

1. Moyen d'amortissement destiné à amortir le rayonnement du son produit par un bruit transmis par l'air ou un bruit de structure pour une roue (9), en particulier pour une roue dentée avec denture à chevrons (10), roue (9) dans laquelle se trouvent des évidements (1, 2) de même forme, de section essentiellement rectangulaire, et seulement contre les parois de chacun desquels (1, 2) existent des couches d'un moyen visco-élastique d'amortissement (3, 4), installé par serrage respectivement contre ces parois avec une plaque de recouvrement (5, 6), caractérisé en ce que la roue (9) a son disque divisé perpendiculairement à l'axe (12) et est composée ainsi de deux parties (7, 8) et en ce que les évidements (1, 2) sont situés sur les faces des deux parties de roue (7, 8) tournées l'une vers l'autre.

2. Moyen d'amortissement selon la revendication 1, caractérisé en ce que le dimensionnement en épaisseur du corps de roue amorti (7, 8), du moyen d'amortissement (3, 4) et de la plaque de recouvrement (5, 6) est proportionné dans le rapport suivant : 4:1:1.
